# FASCICULE DE BREVET EUROPEEN

(11) **EP 2 613 982 B1**
(45) Date de publication et mention de la délivrance du brevet: **16.03.2016**
(21) Numéro de dépôt: 11757384.0
(22) Date de dépôt: 05.08.2011
(51) Int. Cl.: B60S 5/06

(54) **PROCEDE ET SYSTEME DE REMPLACEMENT D'UN CONTENEUR D'ENERGIE D'ALIMENTATION D'UN MOTEUR D'ENTRAINEMENT D'UN VEHICULE AUTOMOBILE**
VERFAHREN UND SYSTEM FÜR DEN ERSATZ EINES STROMVERSORGUNGSBEHÄLTERS FÜR DEN ANTRIEBSMOTOR EINES KRAFTFAHRZEUGES
METHOD AND SYSTEM FOR REPLACING A POWER SUPPLY CONTAINER FOR THE DRIVE ENGINE OF A MOTOR VEHICLE

(30) Priorité: 07.09.2010 FR 1057113
(43) Date de publication de la demande: 17.07.2013
(73) Titulaire: Renault S.A.S., 92100 Boulogne-Billancourt (FR)
(72) Inventeur: ESCANDE, Bruno, F-78790 Septeuil (FR); MARTY, Audrey, F-92210 Saint Cloud (FR)
(86) Numéro de dépôt international: PCT/FR2011/051876
(87) Numéro de publication internationale: WO 2012/032242

(56) Documents cités:
- WO-A1-2010/070642
- FR-A1- 2 685 547
- US-A- 5 612 606
- US-A- 5 998 963

## Description

La présente invention se rapporte à un procédé et dispositif de montage et/ou démontage d'un conteneur d'énergie d'alimentation d'un moteur d'entraînement d'un véhicule automobile. Elle porte aussi sur une station d'échange de conteneur d'énergie mettant en oeuvre un tel procédé.

Certains véhicules automobiles, comme les véhicules électriques ou hybrides, comprennent un conteneur d'énergie d'alimentation d'un moteur d'entraînement, comme une batterie électrique d'alimentation d'un moteur électrique. Dans la suite de la description, le terme de batterie sera utilisé pour désigner au sens large tout conteneur d'alimentation électrique d'un moteur d'entraînement d'un véhicule. Il peut se révéler intéressant d'échanger une telle batterie lorsque son niveau d'énergie est faible contre une nouvelle batterie remplie d'énergie. Ceci peut être fait dans une station similaire à une station service dans laquelle on peut remplir un réservoir d'essence d'un véhicule automobile.

Le document WO2010/070642 A1 décrit un moyen d'échange et un procédé de démontage et de montage d'une batterie d'alimentation d'un moteur d'entraînement d'un véhicule automobile, le procédé comprenant une étape de levage, pour positionner un portoir en appui sous le véhicule automobile pour obtenir une correction de l'assiette et un positionnement du véhicule automobile à une altitude souhaitée, une étape de levage du dispositif d'actionnement et de la lugette pour venir coopérer avec un mécanisme de verrouillage de la batterie du véhicule automobile et la déverrouiller et/ou la verrouiller, et une étape de support et transport de la batterie sur la lugette hors de son logement sur le véhicule automobile.

On connaît du document US 5 612 606 une station d'échange de batterie électrique d'alimentation d'un moteur d'entraînement d'un véhicule électrique et un procédé pour réaliser un tel échange. Dans la station d'échange décrite, le conducteur positionne approximativement le véhicule dans un rail, contre une butée longitudinale par rapport aux équipements de la station. Par la suite, dans des phases plus ou moins automatiques, des moyens mobiles de dépose de la batterie électrique et d'assemblage de la nouvelle batterie au véhicule viennent se positionner relativement au véhicule grâce à des capteurs. La quantité de capteurs et moyens électroniques nécessaires au fonctionnement d'une telle station la rend difficilement fiable et implique que son fonctionnement est peu robuste et peu compatible avec une multitude de véhicules de géométries différentes.

Ainsi, le but de l'invention est de fournir une solution de montage et/ou démontage de batteries remédiant aux inconvénients mentionnés précédemment et améliorant les procédés connus de l'art antérieur.

En particulier, l'objet de l'invention consiste à proposer une solution de montage et/ou démontage de batteries de véhicule automobile simple, fiable, robuste et universel.

A cet effet, l'invention repose sur un procédé de démontage et/ou montage d'une batterie d'alimentation d'un moteur d'entraînement d'un véhicule automobile, comprenant une étape de levage par un moyen d'échange universel comprenant au moins un portoir, un dispositif d'actionnement et une lugette, pour positionner le portoir en appui sous le véhicule automobile pour obtenir une correction de l'assiette et un positionnement du véhicule automobile à une altitude souhaitée, une étape de levage du dispositif d'actionnement et de la lugette pour venir coopérer avec un mécanisme de verrouillage de la batterie du véhicule automobile et la déverrouiller et/ou la verrouiller, et une étape de support et transport de la batterie sur la lugette hors de son logement sur le véhicule automobile.

L'étape de levage du moyen d'échange peut comprendre le levage simultané du portoir, du dispositif d'actionnement et de la lugette, ces éléments étant liés pour former un ensemble dédié.

L'étape de levage du moyen d'échange peut comprendre la mise en appui du portoir sur la caisse du véhicule automobile autour de sa batterie.

L'étape de levage du dispositif d'actionnement et de la lugette pour venir coopérer avec la batterie peut comprendre une mise en pression d'un mécanisme de verrouillage de la batterie pour son débrayage et une rotation de plusieurs verrous pour son déverrouillage et/ou verrouillage.

Le portoir peut maintenir le véhicule automobile à l'altitude souhaitée pendant l'étape de support de la batterie sur la lugette hors du véhicule automobile lors de son déverrouillage et/ou verrouillage.

Le procédé peut comprendre une étape de stockage de la batterie sur la lugette hors de son logement sur le véhicule automobile.

L'invention porte aussi sur un procédé d'échange d'une batterie d'alimentation d'un moteur d'entraînement d'un véhicule automobile, caractérisé en ce qu'il comprend un procédé de démontage et un procédé de montage d'une batterie tel que décrit ci-dessus.

L'invention porte aussi sur un moyen d'échange d'une batterie d'alimentation d'un moteur d'entraînement d'un véhicule automobile selon la revendication 8.

L'invention porte aussi sur une station de remplacement d'une batterie d'alimentation d'un moteur d'entraînement d'un véhicule automobile, caractérisé en ce qu'elle comprend au moins un moyen d'échange tel que décrit ci-dessus.

La station de remplacement d'une batterie peut comprendre des moyens logiciels et matériels pour la mise en oeuvre du procédé de démontage et/ou montage d'une batterie d'alimentation d'un moteur d'entraînement d'un véhicule automobile tel que décrit précédemment.

Ces objets, caractéristiques et avantages de la présente invention seront exposés en détail dans la description suivante d'un mode d'exécution particulier fait à titre non-limitatif en relation avec les figures jointes parmi lesquelles :
La figure 1 représente un véhicule automobile équipé d'une batterie d'alimentation pour la mise en oeuvre de l'invention.
La figure 2 illustre la problématique technique posée par la solution d'échange de la batterie d'un véhicule automobile selon l'invention.
La figure 3 représente une vue en coupe de côté schématique d'un mode de réalisation d'un système d'échange de batterie selon un mode d'exécution de l'invention.
La figure 4 correspond à une représentation fonctionnelle du système d'échange de batterie selon le mode d'exécution de l'invention.
Les figures 5a, 5b, 5c à 11a, 11b, 11c représentent respectivement une vue de côté, une vue de face, et une vue en coupe de côté grossie du véhicule automobile et du moyen d'échange, dans différentes phases d'un procédé de démontage ou montage d'une batterie sur le véhicule automobile selon le mode d'exécution de l'invention.

Le concept de l'invention repose sur l'utilisation d'un moyen de montage et/ou démontage, que nous appellerons plus simplement moyen d'échange unique, compact, permettant de réunir l'ensemble des fonctionnalités nécessaires au démontage et/ou au montage d'une batterie de véhicule automobile.

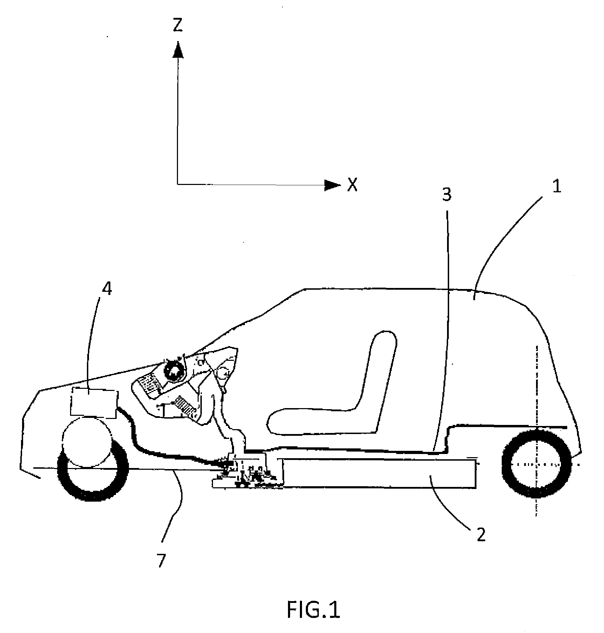

La figure 1 représente un véhicule automobile 1 équipé d'une batterie 2, fixée de manière amovible sous son châssis 3 et reliée à un moyen d'entraînement 4 électrique, de type traction. La liaison de la batterie avec le véhicule automobile repose sur un mécanisme non représenté nécessitant une mise en contrainte dans une direction verticale pour débrayer le mécanisme afin de pouvoir actionner un verrou en rotation autour d'un axe sensiblement vertical, pour finalement déverrouiller et libérer la batterie 2, devenue libre de se déplacer vers le bas par rapport au véhicule, dans une direction sensiblement verticale. Sa fixation sur le véhicule se fait selon les étapes inverses par le même mécanisme. En variante, la batterie 2 pourrait être fixée dans un logement différent sur le véhicule automobile, au niveau du coffre arrière par exemple, et/ou selon un mécanisme différent.

Sur les figures, les axes habituels du véhicule sont représentés. L'axe longitudinal du véhicule est noté X, l'axe transversal du véhicule est noté Y et l'axe vertical du véhicule est noté Z.

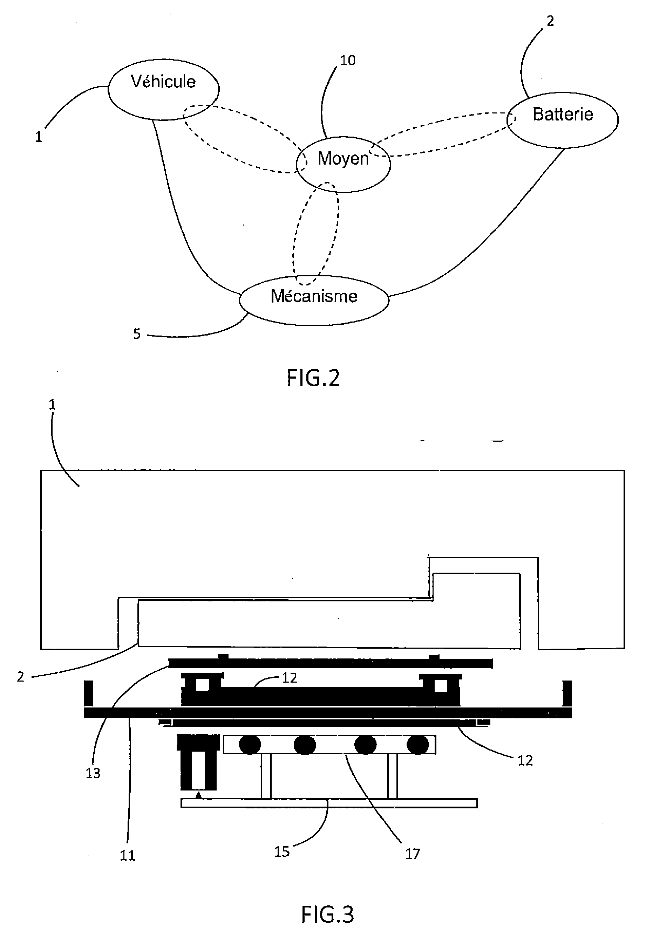

La figure 2 illustre la problématique technique résolue par la solution d'échange de la batterie d'un véhicule automobile. En effet, la batterie 2 est fixée de manière verrouillée par un certain mécanisme 5 sur le véhicule automobile 1. Or, la solution prévoit un système de démontage de la batterie flexible, qui s'adapte sur différents véhicules. Pour cela, elle utilise un moyen d'échange 10 unique qui agit par divers moyens de coopération de manière flexible sur les trois composants, la batterie 2, le mécanisme 5 et le véhicule automobile 1.

La figure 3 illustre ce moyen d'échange 10 selon un mode d'exécution de l'invention. Il comprend de bas en haut un portoir 11 ou luge, un dispositif d'actionnement 12 et une lugette 13. Ce moyen d'échange 10 regroupe donc trois composants principaux distincts, mais liés entre eux de manière à former un tout unique, un ensemble monolithique, au moins temporairement, lors d'une opération de montage et/ou démontage de batterie. Ces trois composants constituent un sous-ensemble du moyen d'échange qui met en oeuvre les fonctions principales pour un procédé de montage et démontage de batteries, selon un fonctionnement qui sera explicité par la suite.

De plus, comme cela est visible sur la figure 3, le moyen d'échange 10 comprend de plus un charriot 15, qui est un élément fixe de la station d'échange, indépendant des véhicules et des batteries, des actionneurs non représentés, et un système de manutention 17.

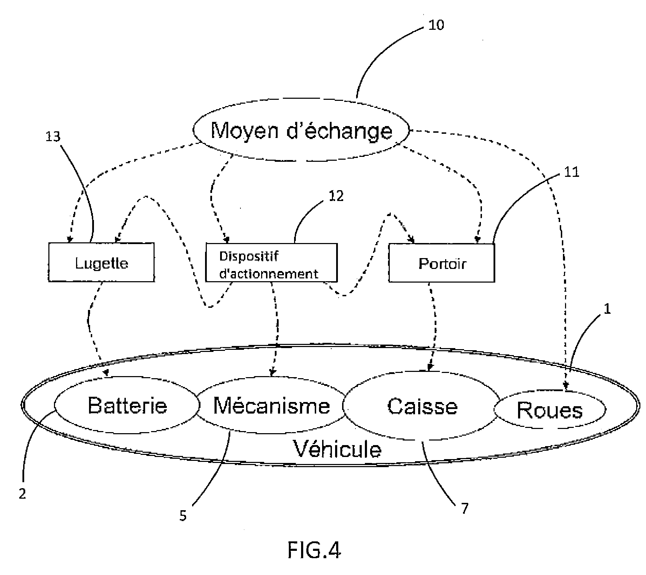

La figure 4 représente une approche fonctionnelle de la solution selon le mode d'exécution de l'invention. Le moyen d'échange 10 comprend donc un portoir 11 qui interagit particulièrement avec la caisse 7 du véhicule automobile 1, un dispositif d'actionnement 12 qui interagit particulièrement avec le mécanisme 5 de fixation de batterie, et une lugette 13 qui interagit particulièrement avec la batterie 2.

Le fonctionnement du moyen d'échange 10 de batterie va maintenant être détaillé en référence avec les figures 5i à 11i, pour lesquelles l'indice a correspond à une vue de côté du véhicule automobile et du moyen d'échange, l'indice b correspond à une vue de face et l'indice c à un grossissement de la vue en coupe de côté au niveau de la batterie.

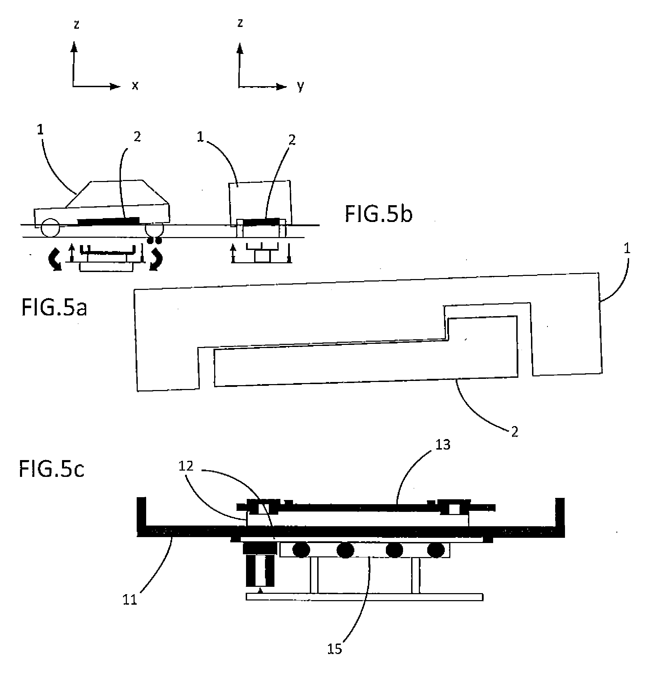

Ainsi, les figures 5a, 5b et 5c représentent une situation initiale dans laquelle une batterie 2 est fixée sous la caisse d'un véhicule automobile 1 et nécessite son remplacement parce que son niveau d'énergie est trop faible. Le moyen d'échange 10, plus particulièrement le chariot 15, se trouve positionné sous le véhicule automobile, à la verticale sous la batterie 2 à remplacer.

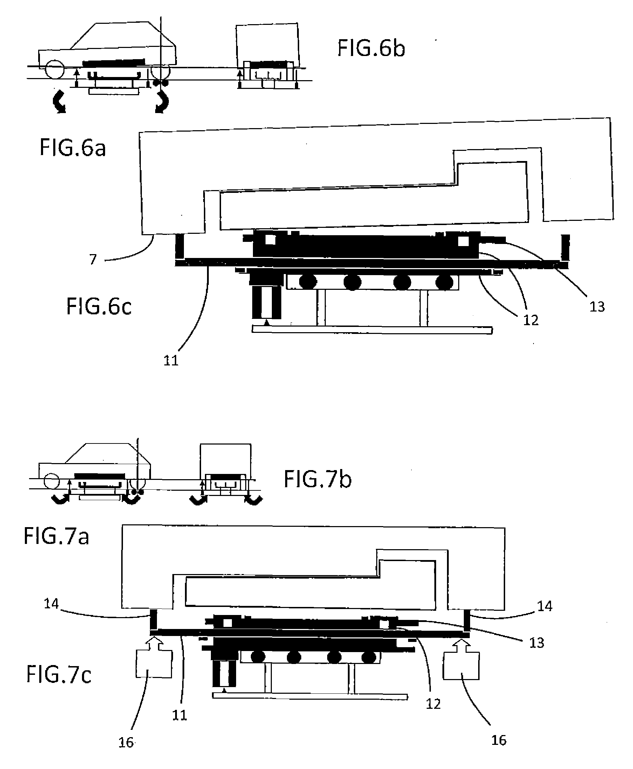

Les figures 6a à 6c représentent une première phase obtenue après le levage vertical du charriot 15 et donc du moyen d'échange 10, dont le portoir 11 vient en contact avec un point adapté de la caisse du véhicule automobile. Comme la caisse 7 et le moyen d'échange 10 ne sont pas parfaitement parallèles, le contact reste ponctuel et non symétrique, à la fois dans les directions longitudinale X et transversale Y.

Ainsi, une poussée P exercée sur le portoir 11 par les actionneurs 16 et transmise au point adapté de la caisse 7 permet de corriger la position précédente pour obtenir un contact uniforme du portoir 11 sur la caisse, et induire un bon positionnement relatif du moyen d'échange 10 et de la caisse, comme représenté sur les figures 7a à 7c. Cette phase permet de remplir une fonction qualifiée de correction d'assiette. En remarque, les actionneurs 16 appartiennent au moyen d'échange 10 et sont indépendants du type de véhicule et de batterie.

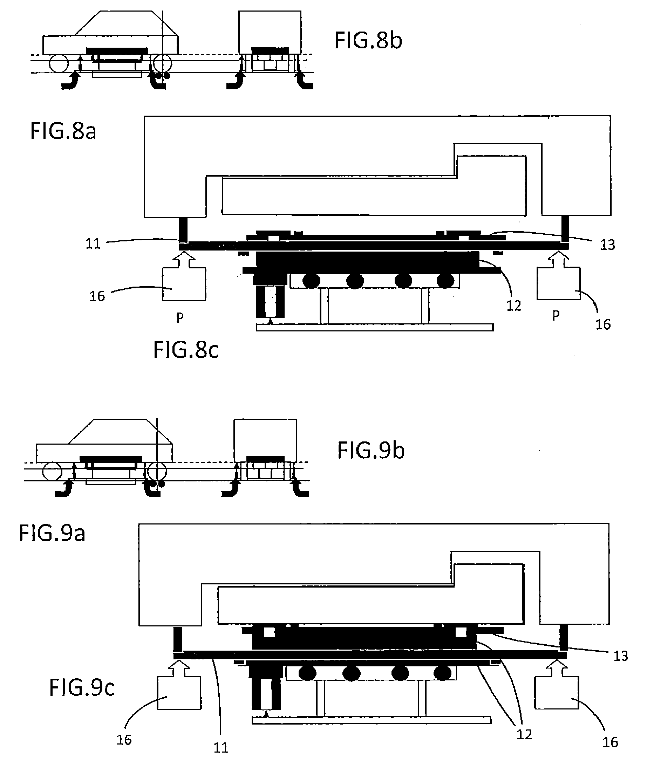

Ensuite, une nouvelle poussée P vers le haut exercée par les actionneurs sur le portoir 11, permet de soulever le véhicule automobile pour l'amener à une hauteur prédéfinie dite altitude de travail, comme représenté par les figures 8a à 8c. Cet appui sur les points adaptés de la caisse 7 par l'intermédiaire du portoir 11 permet donc d'affiner la mise en position du véhicule par rapport au sol et par rapport au moyen d'échange 10 de batterie, dans les trois directions X, Y et Z. Dans toutes ces phases de levage du charriot 15 et donc du moyen d'échange 10, les trois éléments principaux du moyen d'échange, le portoir 11, le dispositif d'actionnement 12 et la lugette 13, restent assemblés et forment un bloc unique, un ensemble universel dédié.

Dans la position de travail du véhicule automobile, le charriot 15 induit alors la montée du dispositif d'actionnement 12 et de la luge 13, jusqu'en position de coopération avec la batterie 2, comme représenté sur les figures 9a à 9c, pour initier la phase de démontage de la batterie. Durant toute cette phase, le portoir 11 maintient le véhicule automobile dans sa position de travail prédéfinie.

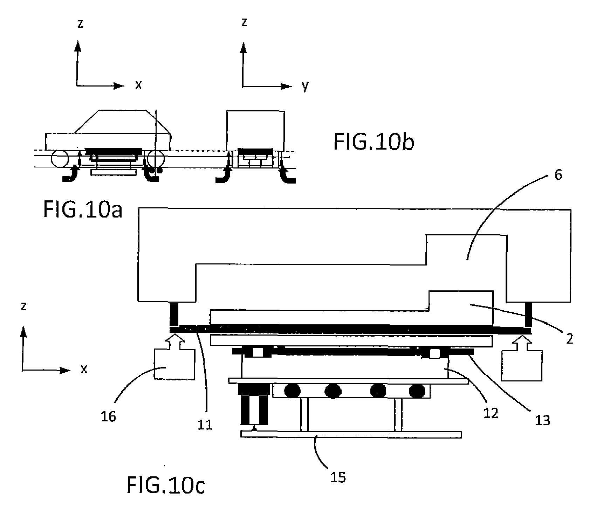

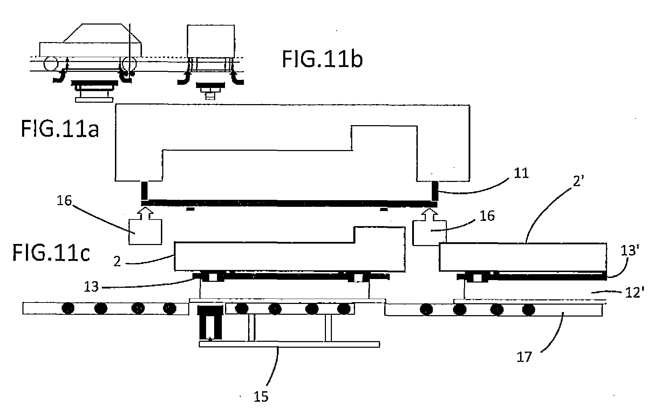

Dans cette position, les actionneurs du dispositif d'actionnement 12 agissent sur le mécanisme de fixation de la batterie, afin de désolidariser la batterie 2 du véhicule automobile, et obtenir son positionnement sur la lugette 13, qui lui sert de support, comme représenté sur les figures 10a à 10c, où le dispositif d'actionnement 12 et la lugette 13 ont retrouvé une position basse sur le charriot 15 en entraînant la batterie 2 libérée de son emplacement 6 prévu sur le véhicule 1. Au contraire, le portoir 11 est maintenu dans sa position haute pour maintenir le véhicule automobile dans sa position en altitude de travail par les actionneurs 16. Le véhicule automobile 1 reste ainsi dans sa position de travail, prêt à recevoir la fixation d'une nouvelle batterie 2' chargée, qui est amenée par l'intermédiaire d'un autre ensemble formé par un dispositif d'actionnement 12' et lugette 13' via un système de manutention 17 du moyen d'échange 10 universel. Cette position finale du procédé de démontage est représentée sur les figures 11a à 11 c. La batterie vide 2 peut être stockée facilement sur son support formé par la lugette 13.

Ensuite, le procédé de montage de la nouvelle batterie chargée 2' n'est pas illustré mais comprend les étapes inverses de celles décrites ci-dessus pour le démontage qui est réversible. Ce procédé de montage enchaîne donc les étapes représentées des figures 11 à 5.

En remarque, le procédé de démontage de batterie peut utiliser également un dispositif de palpage de la position du véhicule automobile selon l'axe transversal Y du véhicule, par exemple par deux moyens de palpage venant en appui contre les faces latérales du véhicule, par exemple en appui contre les deux faces latérales des roues du train arrière du véhicule. Ainsi, les données fournies par le dispositif de palpage facilitent le bon positionnement du moyen d'échange de batteries par rapport au véhicule dans une étape préalable non représentée.

Il apparaît donc que le moyen d'échange 10 universel de batterie selon l'invention associe au moins trois composants complémentaires 11, 12, 13 qui remplissent des fonctions complémentaires dans la mise en oeuvre du procédé de montage et/ou démontage de la batterie, comme décrit en figure 4.

La lugette 13 sert à un positionnement précis de l'ensemble sous la batterie et de support de batterie quand elle est démontée.

Le dispositif d'actionnement 12 remplit la fonction principale de manoeuvre pour verrouiller et/ou déverrouiller une batterie sur un véhicule automobile. Pour cela, ce dispositif comprend de manière avantageuse une interface standard et comprend un certain nombre de composants standards et modulaires afin d'obtenir un dispositif adapté pour une intervention sur tous types de batteries et tous véhicules automobiles. Un tel dispositif d'actionnement 12 est aussi appelé par sa dénomination anglo-saxonne « toolbox ».

Selon le mode d'exécution intéressant, la fixation d'une batterie sur un véhicule automobile nécessite d'abord un mouvement de translation verticale, pour obtenir son débrayage, avant de pouvoir obtenir son verrouillage ou déverrouillage par un second mouvement de rotation de verrous.

Naturellement, le dispositif d'actionnement 12 peut se présenter sous toute forme, afin d'agir sur un mécanisme de fixation de batterie selon toute cinématique, ou avec des moyens différents, par exemple à partir de robots.

Le portoir 11 remplit donc une fonction de correction d'assiette et de support du véhicule automobile dans toute l'opération, à une altitude et dans une position prédéfinies. Pour cela, il comprend au moins trois points d'appui 14 de la caisse 7 du véhicule, répartis autour de la batterie (figures 7a à 7c). Ces points seront choisis afin que, quelque soit l'état de charge du véhicule, son centre de gravité se trouve le plus proche possible du centre du polygone formé des points d'appui. Les points adaptés de la caisse en regard des points 14 de la luge 11 doivent présenter des caractéristiques de raideur et de géométrie permettant l'opération de positionnement. Le portoir 11 présente une interface invariante vis-à-vis des actionneurs 16 du moyen d'échange 10.

Enfin, le système de manutention 17 du moyen d'échange 10 remplit une fonction de convoyeur, pour transporter l'ensemble des trois composants principaux 11, 12, 13 horizontalement sous le véhicule automobile. Ensuite, le charriot 15 remplit une seconde fonction de levage vertical, pour positionner cet ensemble en coopération avec le véhicule automobile et sa batterie. L'invention porte aussi sur une station d'échange de batteries, qui peut se présenter sous la forme d'une station service conventionnelle, équipée d'un ou plusieurs moyens d'échange de batteries.

Naturellement, le système d'échange de l'invention comprend, outre les moyens matériels décrits précédemment, des moyens logiciels permettant aux moyens matériels d'agir en séquence pour mettre en oeuvre le procédé de montage et/ou démontage décrit, de manière automatisée, contrôlée et fiable. Les moyens logiciels peuvent notamment comprendre des programmes d'ordinateur se trouvant sur un serveur central de la station d'échange de batteries.

La solution a été décrite dans le cadre du remplacement d'une batterie d'une voiture mais elle peut naturellement être implémentée pour tout montage ou démontage de tout composant situé dans la partie inférieure de tout véhicule, comme une voiture, un camion, un train, etc.

Finalement, la solution atteint bien l'objet recherché et présente les avantages suivants :
- elle repose sur un moyen d'échange universel formant un bloc unique ou un ensemble dédié, ce qui permet une gestion simple et économique, permettant un stockage peu encombrant, un déplacement aisé et optimisé ;
- cet ensemble comprend des éléments permettant une adaptabilité universelle. Ainsi, ce même ensemble permet une intervention sur tout véhicule, ce qui permet sa production économique en série et une gestion simple dans une station d'échange de batterie ;
- tout individu peut entrer et/ou sortir du véhicule pendant tout le procédé d'échange de batterie, ce qui le rend très convivial.

## Revendications

1. Procédé de démontage et/ou montage d'une batterie (2) d'alimentation d'un moteur d'entraînement d'un véhicule automobile (1) comprenant une étape de levage par un moyen d'échange (10) universel comprenant au moins un portoir (11), un dispositif d'actionnement (12) et une lugette (13), pour positionner le portoir (11) en appui sous le véhicule automobile pour obtenir une correction de l'assiette et un positionnement du véhicule automobile à une altitude souhaitée, une étape de levage du dispositif d'actionnement (12) et de la lugette (13) pour venir coopérer avec un mécanisme (5) de verrouillage de la batterie (2) du véhicule automobile et la déverrouiller et/ou la verrouiller, et une étape de support et transport de la batterie (2) sur la lugette (13) hors de son logement (6) sur le véhicule automobile.

2. Procédé de démontage et/ou montage d'une batterie (2) d'alimentation d'un moteur d'entraînement d'un véhicule automobile (1) selon la revendication 1, **caractérisé en ce que** l'étape de levage du moyen d'échange (10) comprend le levage simultané du portoir (11), du dispositif d'actionnement (12) et de la lugette (13), ces éléments étant liés pour former un ensemble dédié.

3. Procédé de démontage et/ou montage d'une batterie (2) d'alimentation d'un moteur d'entraînement d'un véhicule automobile (1) selon l'une des revendications précédentes, **caractérisé en ce que** l'étape de levage du moyen d'échange (10) comprend la mise en appui du portoir (11) sur la caisse (7) du véhicule automobile autour de sa batterie (2).

4. Procédé de démontage et/ou montage d'une batterie (2) d'alimentation d'un moteur d'entraînement d'un véhicule automobile (1) selon l'une des revendications précédentes, **caractérisé en ce que** l'étape de levage du dispositif d'actionnement (12) et de la lugette (13) pour venir coopérer avec la batterie (2) comprend une mise en pression d'un mécanisme de verrouillage de la batterie (2) pour son débrayage et une rotation de plusieurs verrous pour son déverrouillage et/ou verrouillage.

5. Procédé de démontage et/ou montage d'une batterie (2) d'alimentation d'un moteur d'entraînement d'un véhicule automobile (1) selon l'une des revendications précédentes, **caractérisé en ce que** le portoir (11) maintient le véhicule automobile (1) à l'altitude souhaitée pendant l'étape de support de la batterie (2) sur la lugette (13) hors du véhicule automobile lors de son déverrouillage et/ou verrouillage.

6. Procédé de démontage et/ou montage d'une batterie (2) d'alimentation d'un moteur d'entraînement d'un véhicule automobile (1) selon l'une des revendications précédentes, **caractérisé en ce qu'**il comprend une étape de stockage de la batterie (2) sur la lugette (13) hors de son logement sur le véhicule automobile.

7. Procédé d'échange d'une batterie (2) d'alimentation d'un moteur d'entraînement d'un véhicule automobile (1), **caractérisé en ce qu'**il comprend un procédé de démontage et un procédé de montage d'une batterie (2) selon l'une des revendications précédentes.

8. Moyen d'échange d'une batterie (2) d'alimentation d'un moteur d'entraînement d'un véhicule automobile (1), **caractérisé en ce qu'**il comprend un moyen d'échange (10) universel comprenant au moins un portoir (11) apte à se positionner en appui sous le véhicule automobile pour obtenir une correction de l'assiette et un positionnement du véhicule automobile à une altitude souhaitée, un dispositif d'actionnement (12) apte à actionner le mécanisme de fixation de la batterie (2), une lugette (13) apte à supporter et transporter la batterie (2), le moyen d'échange comprenant en outre un charriot (15) pour le déplacement vertical de l'ensemble formé par le portoir (11), le dispositif d'actionnement (12), la lugette (13) et un élément de manutention (17) pour le déplacement horizontal des batteries.

9. Station de remplacement d'une batterie (2) d'alimentation d'un moteur d'entraînement d'un véhicule automobile (1), **caractérisé en ce qu'**elle comprend au moins un moyen d'échange selon la revendication précédente.

10. Station de remplacement d'une batterie (2) d'alimentation d'un moteur d'entraînement d'un véhicule automobile (1) selon la revendication précédente, **caractérisé en ce qu'**elle comprend des moyens logiciels et matériels pour la mise en oeuvre du procédé de démontage et/ou montage d'une batterie (2) d'alimentation d'un moteur d'entraînement d'un véhicule automobile (1) selon l'une des revendications 1 à 6.

## Patentansprüche

1. Demontage- und/oder Montageverfahren einer Versorgungsbatterie (2) eines Antriebsmotors eines Kraftfahrzeugs (1), das einen Hebeschritt durch ein Universalaustauschmittel (10), das mindestens einen Träger (11), eine Betätigungsvorrichtung (12) und einen kleinen Schlitten (13) umfasst, um den Träger (11) in Auflage unter dem Kraftfahrzeug zu positionieren, um eine Korrektur der Trimmlage und eine Positionierung des Kraftfahrzeugs in einer gewünschten Höhe zu erhalten, einen Hebeschritt der Betätigungsvorrichtung (12) und des kleinen Schlittens (13), um mit einem Mechanismus (5) zum Verriegeln der Batterie (2) des Kraftfahrzeugs in Zusammenwirkung zu gelangen und sie zu entriegeln und/oder zu verriegeln, und einen Schritt des Tragens und Transportierens der Batterie (2) auf dem kleinen Schlitten (13) aus ihrer Aufnahme (6) auf dem Kraftfahrzeug heraus umfasst.

2. Demontage- und/oder Montageverfahren einer Versorgungsbatterie (2) eines Antriebsmotors eines Kraftfahrzeugs (1) nach Anspruch 1, **dadurch gekennzeichnet, dass** der Hebeschritt des Austauschmittels (10) das gleichzeitige Heben des Trägers (11), der Betätigungsvorrichtung (12) und des kleinen Schlittens (13) umfasst, wobei diese Elemente verbunden sind, um eine dedizierte Einheit zu bilden.

3. Demontage- und/oder Montageverfahren einer Versorgungsbatterie (2) eines Antriebsmotors eines Kraftfahrzeugs (1) nach einem der vorhergehenden Ansprüche, **dadurch gekennzeichnet, dass** der Hebeschritt des Austauschmittels (10) das Anlegen des Trägers (11) auf der Karosserie (7) des Kraftfahrzeugs um seine Batterie (2) umfasst.

4. Demontage- und/oder Montageverfahren einer Versorgungsbatterie (2) eines Antriebsmotors eines Kraftfahrzeugs (1) nach einem der vorhergehenden Ansprüche, **dadurch gekennzeichnet, dass** der Hebeschritt der Betätigungsvorrichtung (12) und des kleinen Schlittens (13), um mit der Batterie (2) zusammenzuwirkung zu gelangen, ein Druckbeaufschlagen eines Verriegelungsmechanismus der Batterie (2) für ihr Auskuppeln und eine Drehung mehrerer Riegel zu ihrem Entriegeln und/oder Verriegeln umfasst.

5. Demontage- und/oder Montageverfahren einer Versorgungsbatterie (2) eines Antriebsmotors eines Kraftfahrzeugs (1) nach einem der vorhergehenden Ansprüche, **dadurch gekennzeichnet, dass** der Träger (11) das Kraftfahrzeug (1) in der gewünschten Höhe während des Hebeschritts der Batterie (2) auf den kleinen Schlitten (13) außerhalb des Kraftfahrzeugs bei seinem Entriegeln und/oder Verriegeln umfasst.

6. Demontage- und/oder Montageverfahren einer Versorgungsbatterie (2) eines Antriebsmotors eines Kraftfahrzeugs (1) nach einem der vorhergehenden Ansprüche, **dadurch gekennzeichnet, dass** es einen Lagerschritt der Batterie (2) auf dem kleinen Schlitten (13) außerhalb ihrer Aufnahme auf dem Kraftfahrzeug umfasst.

7. Austauschverfahren einer Versorgungsbatterie (2) eines Antriebsmotors eines Kraftfahrzeugs (1), **dadurch gekennzeichnet, dass** es ein Demontageverfahren und ein Montageverfahren einer Batterie (2) nach einem der vorhergehenden Ansprüche umfasst.

8. Austauschmittel einer Versorgungsbatterie (2) eines Antriebsmotors eines Kraftfahrzeugs (1), **dadurch gekennzeichnet, dass** es ein Universalaustauschmittel (10) umfasst, das mindestens einen Träger (11) umfasst, der geeignet ist, um sich in Auflage unter dem Kraftfahrzeug zu positionieren, um eine Korrektur der Trimmlage und eine Positionierung des Kraftfahrzeugs in einer gewünschten Höhe zu erhalten, eine Betätigungsvorrichtung (12), die geeignet ist, um den Befestigungsmechanismus der Batterie (2) zu betätigen, einen kleinen Schlitten (13), der die Batterie (2) tragen und transportieren kann, wobei das Austauschmittel außerdem einen Wagen (15) zum vertikalen Bewegen der Einheit umfasst, die aus dem Träger (11), der Betätigungsvorrichtung (12), dem kleinen Schlitten (13) und einem Förderelement (17) für die horizontale Bewegung der Batterien gebildet ist.

9. Austauschstation einer Versorgungsbatterie (2) eines Antriebsmotors eines Kraftfahrzeugs (1), **dadurch gekennzeichnet, dass** sie mindestens ein Austauschmittel nach dem vorhergehenden Anspruch umfasst.

10. Austauschstation einer Versorgungsbatterie (2) eines Antriebsmotors eines Kraftfahrzeugs (1) nach dem vorhergehenden Anspruch, **dadurch gekennzeichnet, dass** sie Software- und Materialmittel zur Umsetzung des Demontageverfahrens und/oder des Montageverfahrens einer Versorgungsbatterie (2) eines Antriebsmotors eines Kraftfahrzeugs (1) nach einem der Ansprüche 1 bis 6 umfasst.

## Claims

1. Method for dismounting and/or mounting a battery (2) for supplying power to a drive engine of a motor vehicle (1), comprising a step of lifting by a universal exchange means (10) comprising at least one holding plate (11), an actuation device (12) and a supporting platform (13) in order to position the holding plate (11) in a bearing position below the motor vehicle to correct the trim and to position the motor vehicle at a desired height, a step of lifting the actuation device (12) and the supporting platform (13) to cooperate with a mechanism (5) for locking the battery (2) of the motor vehicle and to unlock and/or lock said battery, and a step of supporting and transporting the battery (2) on the supporting platform (13) outside the housing (6) thereof on the motor vehicle.

2. Method for dismounting and/or mounting a battery (2) for supplying power to a drive engine of a motor vehicle (1) according to Claim 1, **characterized in that** the step of lifting the exchange means (10) comprises the simultaneous lifting of the holding plate (11), the actuation device (12) and the supporting platform (13), said elements being associated to form a dedicated assembly.

3. Method for dismounting and/or mounting a battery (2) for supplying power to a drive engine of a motor vehicle (1) according to one of the preceding claims, **characterized in that** the step of lifting the exchange means (10) comprises the positioning of the holding plate (11) in a bearing position on the body (7) of the motor vehicle around the battery (2) thereof.

4. Method for dismounting and/or mounting a battery (2) for supplying power to a drive engine of a motor vehicle (1) according to one of the preceding claims, **characterized in that** the step of lifting the actuation device (12) and the supporting platform (13) to cooperate with the battery (2) comprises subjecting a mechanism for locking the battery (2) to pressure for the disengagement thereof and rotating a plurality of locks for the unlocking and/or locking thereof.

5. Method for dismounting and/or mounting a battery (2) for supplying power to a drive engine of a motor vehicle (1) according to one of the preceding claims, **characterized in that** the holding plate (11) holds the motor vehicle (1) at the desired height during the step of supporting the battery (2) on the supporting platform (13) outside the motor vehicle when it is unlocked and/or locked.

6. Method for dismounting and/or mounting a battery (2) for supplying power to a drive engine of a motor vehicle (1) according to one of the preceding claims, **characterized in that** it comprises a step of storing the battery (2) on the supporting platform (13) outside the housing thereof on the motor vehicle.

7. Method for exchanging a battery (2) for supplying power to a drive engine of a motor vehicle (1), **characterized in that** it comprises a method for dismounting a battery and a method for mounting a battery (2) according to one of the preceding claims.

8. Means for exchanging a battery (2) for supplying power to a drive engine of a motor vehicle (1), **characterized in that** it comprises a universal exchange means 10 comprising at least one holding plate (11) capable of positioning itself in a bearing position below the motor vehicle to correct the trim and to position the motor vehicle at a desired height, an actuation device (12) capable of actuating the mechanism for fixing the battery (2), a supporting platform (13) capable of supporting and transporting the battery (2), the exchange means furthermore comprising a carriage (15) for the vertical displacement of the assembly formed by the holding plate (11), the actuation device (12), the supporting platform (13) and a handling element (17) for the horizontal displacement of the batteries.

9. Station for replacing a battery (2) for supplying power to a drive engine of a motor vehicle (1), **characterized in that** it comprises at least one exchange means according to the preceding claim.

10. Station for replacing a battery (2) for supplying power to a drive engine of a motor vehicle (1) according to the preceding claim, **characterized in that** it comprises software and hardware means for implementing the method of dismounting and/or mounting a battery (2) for supplying power to a drive engine of a motor vehicle (1) according to one of Claims 1 to 6.
